# EUROPEAN PATENT SPECIFICATION

(11) **EP 1 870 184 B1**
(45) Date of publication and mention of the grant of the patent: **29.07.2009**
(21) Application number: 07110617.3
(22) Date of filing: 20.06.2007
(51) Int. Cl.: B23B 13/12

(54) **Puller and method for moving a billet in a machine tool**
Ziehvorrichtung und Verfahren zum Bewegen eines Rohlings in einer Werkzeugmaschine
Crochet et procédé pour déplacer une billette dans une machine-outil

(30) Priority: 22.06.2006 FI 20065437; 15.12.2006 FI 20065814
(43) Date of publication of application: 26.12.2007
(73) Proprietor: Silvennoinen, Martti, 41120 Puuppola (FI)
(72) Inventor: Silvennoinen, Martti, 41120 Puuppola (FI)
(74) Representative: Helke, Kimmo Kalervo

(56) References cited:
- US-A- 4 580 470
- US-A- 5 960 689

## Description

The invention relates to a puller which is intended for moving a billet in a machine tool, and which puller comprises a counter lug and two grappling devices equipped with loading elements for gripping a billet, and the grappling devices are arranged in the same line with the midpoint of the billet while the grappling devices form two contact points with the billet. The invention also relates to a method for moving a billet in a machine tool.

Current machine tools, such as NC lathes, are widely automated. Many machine tools are capable of fastening the piece to be machined by themselves. A bar-like or a tube-like billet is also used, which is fed through the lathe chuck. The billet can be moved manually or by using a special bar magazine. Pullers also exist that are fastened to the tool magazine of the lathe, and which are operated by utilizing the movement allowances of the machine tool.

A known puller is driven in contact with the billet by force in the longitudinal direction of the billet. In other words, the puller is pressed against the billet end. As grappling devices, the puller has toothed jaws equipped with rigid springs. Jaws contacting the outer periphery of the billet wear fast during use and locking is unreliable. Moreover, the puller is suitable only for billets of particular sizes. A similar puller is disclosed in JP patent application No. 2005066739. This tool has a pulling ring corresponding precisely to the billet's outer diameter. The tool itself is fastened to the lathe turret, which is moved to use the puller.

US patent No. 4580470 discloses a puller, the body of which comprises two rockers. At the end of each rocker there is a rotatably supported roller having a cover made of soft polyurethane. The body is also provided with a coil spring arranged between the rockers. The coil spring pushes the rockers continuously resulting in that the rollers tend to approach each other.

An adjustable stopper pin is also set between the rockers. When gripping a billet, the puller is moved in the cross direction relative to the billet. Then the rollers touch the billet surface and separate from each other. The cross directional movement is continued until the stopper pin hits the billet surface. Then the rollers have clearly passed the center line of the billet whereupon a connection to the billet formed by three contact points is created. After this the billet can be transferred by moving the puller in the longitudinal direction of the billet.

The proposed puller is complicated and requires a large space for functioning. In addition, the travel ranges of the rockers are long, which causes clearances. Moreover, transferring the billet generates bending moment in the rockers, which increases the inaccuracy during the transfer. Elastic rollers, for their part, cause clearances and wear fast during use. The puller is also incapable of preventing the billet's rotation about its longitudinal axis. A connection based on three contact points requires a lot of adjustment. The stopper pin, in particular, must be adjusted separately for each billet diameter. Also, the puller must be moved carefully, since the cross directional movement should stop when the stopper pin touches the billet. Moving is also decelerated by the unlimited movement of the coil spring.

US patent No. 5960689 discloses an apparatus for gripping a bar supported for rotation by a numerically controlled lathe. The apparatus contains two jaws and a gripper cam pivotally attached to each jaw and springs attached to the jaws tend to rotate the gripper cams away from the jaws. A device is provided for moving the jaws together, moving the jaws apart, and locking the jaws into a fixed position.

The object of the invention is to provide a novel puller for moving a billet in a machine tool, the puller being more resistant and more precise than before and suitable for different billets. The object of the invention is also to provide a novel method for moving a billet in a machine tool the use of which method is more reliable and faster than before. The characteristic features of the puller according to this invention become evident from the appended claim 10. According to the invention, two non-rotating grappling devices are used in the puller, which makes the locking of the puller reliable and prevents the grappling devices from impact loads. Using the puller is fast and precise. In addition, the puller is clearance-free and endures even high stresses without wearing. The design of the puller enables good adjustability and it is well suitable for billets of various sizes and even of various shapes.

The invention is described below in detail by making reference to the enclosed drawings, which illustrate some of the embodiments of the invention, in which
- Figure 1a: provides an axonometric view of the puller according to the invention and a billet as well as a work stage diagram,
- Figure 1b: is a front view of the puller according to the invention,
- Figure 1c: is a lateral view of the puller according to the invention,
- Figure 1d: is a top view of the puller according to the invention and a billet,
- Figure 2a: is a lateral view of the body of the puller according to the invention,
- Figure 2b: is a lateral view of the slide of the puller according to the invention,
- Figure 2c: is a cross sectional top view of the slide of the puller according to the invention,
- Figures 3a-b: provide a cross sectional view of both rollers of different size of the puller according to the invention,
- Figures 3c-d: provide an axonometric view of both rollers of different size of the puller according to the invention,
- Figure 4: is a cross sectional view of the puller according to the invention,
- Figure 5a: provides both a cross sectional and an axonometric view of the adjustor spanner of the puller according to the invention,
- Figure 5b: provides both a cross sectional and an axonometric view of the adjustor sleeve of the puller according to the invention,
- Figure 5c: provides both a cross sectional and an axonometric view of the clamping sleeve of the puller according to the invention,
- Figure 6a: is a partial cross sectional view of a second application of the end component according to the invention, as seen from below,
- Figure 6b: is a partial cross sectional view of a second application of the guideway according to the invention, as seen from the end,
- Figure 7a: shows a second embodiment of the puller according to the invention equipped with slide loading elements,
- Figure 7b: shows the slide of Figure 7a set within a partially shown guideway,
- Figure 8a: shows the ratio of pressing force of the puller of Figures 7a and 7b to the distance adjustment value of the rollers,
- Figure 8b: is a principal drawing illustrating the operating principle of the puller according to the invention.

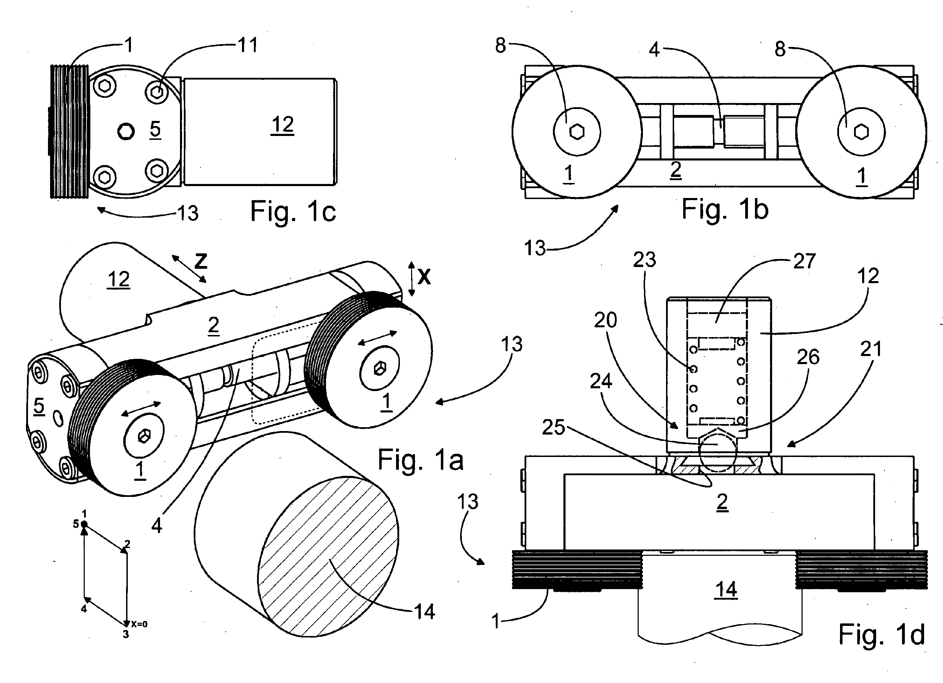

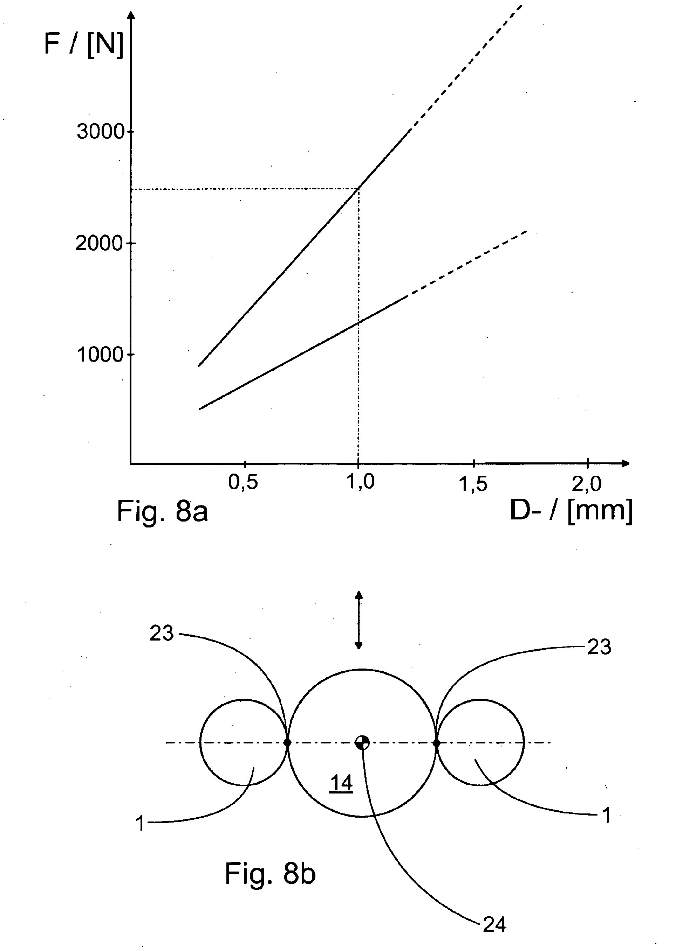

Figures 1a - 5c show the puller according to the invention and its various parts as seen from different directions. The puller is intended for moving a billet in a machine tool, such as an NC lathe. A billet 14 is shown in Figures 1a and 1d and it is usually a round bar. The puller also comprises a counter lug 12, by which the puller is fastened, for example, to a lathe turret (not shown). The puller comprises additionally grappling devices 13 equipped with loading elements 15 for gripping a billet 14. The grappling devices 13 are adapted to be set in contact with the billet 14 with a substantially cross directional movement of the billet 14. Thus the stress and wear of the grappling devices are notably lower than before. According to the invention, as grappling devices 13 two rollers 1 are used, which are surprisingly placed non-rotatably to the puller. The rollers 1 are so placed that the two contact points 23 created by the rollers 1 with the billet 14 are adapted to be within the same line with the center point 24 of the billet 14 (Figure 8b). Thus the contact distance of the rollers to the billet is advantageously short, which reduces the rollers' wear. In Figure 8b, the X directional movement of the puller is indicated with a double-ended arrow. In addition, when the rollers are non-rotating, the rotation of the billet about its longitudinal axis is avoided. Then the billet stays reliably in the grip of the puller even without the rollers' engaging the billet. This kind of arrangement is advantageous as regards the use of the puller. The puller can always be driven with a rapid movement always to the same position using the same subprogram of the machine tool. This applies also when the billet diameter changes. On the other hand, in a machine tool disturbance, the puller can move even further than the set value without the puller touching the billet.

In practice, the position of the lathe turret is X, Z when starting to search for a new billet length (position 1). Next, the puller is driven to position 2 with a fast movement so that the desired portion of the grappling device length is on top of the billet to be pulled. During this transfer the grappling devices are detached from the billet. Next the puller is driven with a fast movement to position 3 in which the turret's X position is zero. In other words, the center point of the counter lug is at the center of the lathe chuck. Then the dented outer surface of the grappling devices presses the billet's outer surface with the loading elements. The grappling devices grip the billet tightly and the lathe chuck can be opened. Next, the puller is driven with a fast feed movement for a desired distance in the Z direction to position 4 and the chuck is closed. Finally, the puller is driven with a fast movement to the initial position 1 (position 5) in the X direction, after which the machine process can start. By setting the puller by 90° in a different angle compared to the position of Figure 1a, the cross directional movement according to the invention is in the direction of axis Y. Generally, the grappling devices according to the invention are in a perpendicular line compared to the puller's movement.

The method thus uses a puller which is fastened to a machine tool. The puller is driven in contact with the billet after which the billet is moved by moving the puller with the machine tool. The puller is driven in contact with the billet with a substantially cross directional movement of the billet. In a corresponding way, the puller is detached from the billet substantially in the cross direction of the billet. In the puller according to the invention, it is also possible to adjust both the load and the mutual position of the grappling devices independently of each other. Thus the puller is suitable for different billets and the puller functions in the designed way in various applications. On the other hand, in another embodiment of the puller it is also possible to adjust both the load and the mutual position of the grappling devices independently of each other.

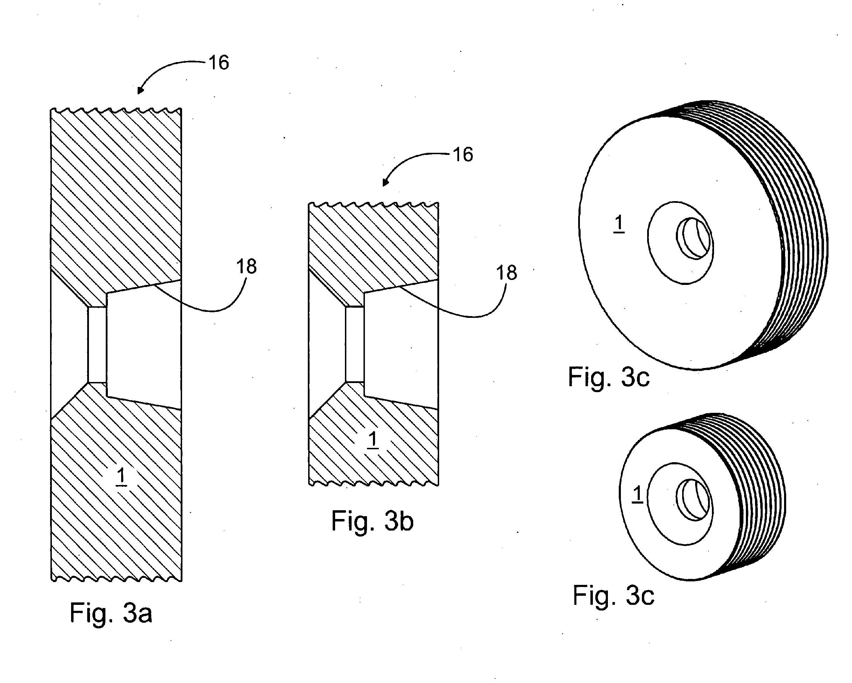

According to the invention, the grappling devices 13 thus consist of two rollers 1 that are set non-rotatably in the puller. Advantageously the rollers 1 are additionally equipped with toothing 16. The toothing provides sufficient friction for keeping the puller attached to the billet during the transfer. In addition, non-rotating rollers maintain even a round billet attached avoiding thus detachment of the billet when opening the chuck. In the puller the rotation axis of both rollers 1 is set substantially to the longitudinal direction of the billet 14. Thus the toothings contact the billet surface over their entire width, which avoids loading of individual teeth. Figures 3a-3d illustrate rollers 1 according to the invention, in which the toothing 16 covers the entire circumference of the roller 1. In practice, a very short portion of the toothing contacts the billet surface. When this point possibly wears or damages otherwise, the roller can be detached and rotated slightly for turning a new point to replace the worn one.

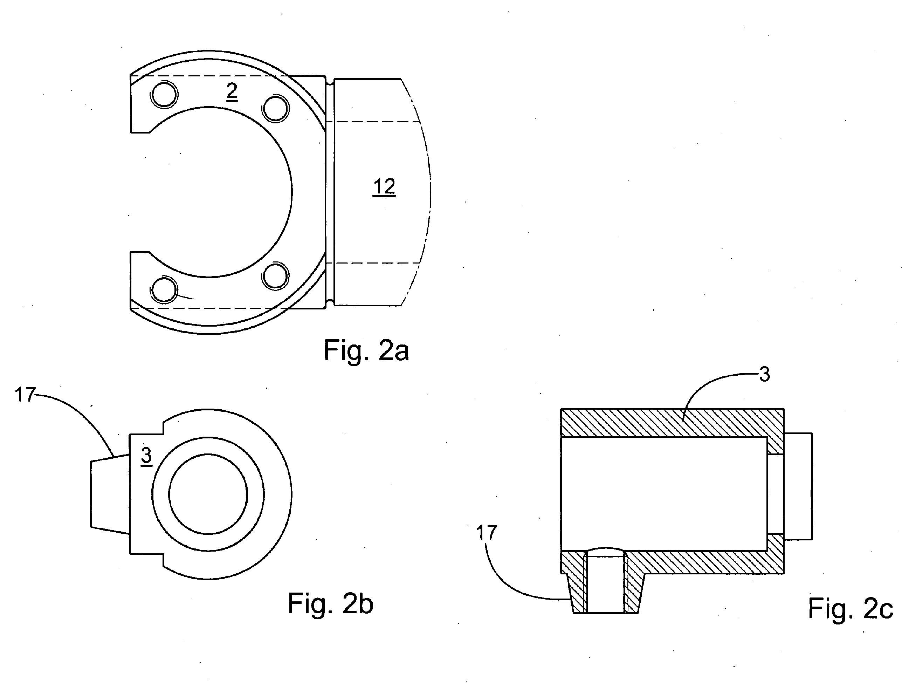

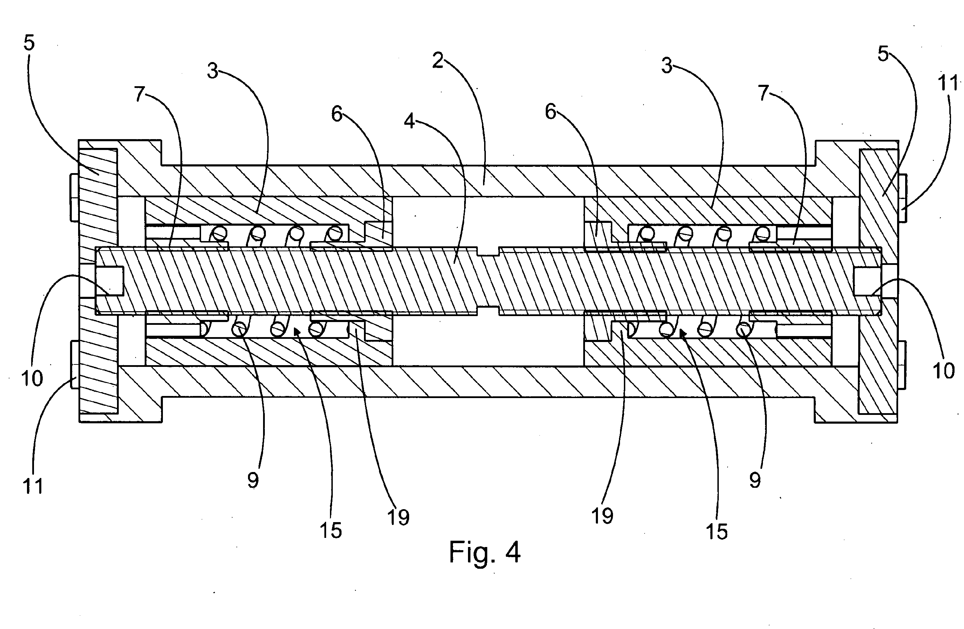

The counter lug 12 includes a guideway 2, to which two slides 3 are arranged for the grappling devices 13. The guideway 2 is here a substantially round profile for its cross section, which is closed at both ends with end pieces 5 (Figure 2). In the embodiment shown in Figure 4, both end pieces 5 are attached to the guideway 2 with four screws 11. Both slides with their loading elements can be extracted from the guideway by unscrewing the screws from one end and removing the end piece. In Figures 3a-d two types of rollers 1 are illustrated. The smaller roller, of 35 mm, is used when the billet diameter is less than 80 mm. Correspondingly, the larger roller, of 50 mm, is used when the billet diameter is more than 20 mm. In addition to these, the puller comprises a third pair of rollers, even smaller than the previous ones, in which the roller diameter is 19 mm (not shown). In the embodiment shown, when using the 50 mm roller, the billet diameter can vary between 15 - 38 mm. In rollers of 35 mm this distance is 30 - 53 mm while in rollers of 19 mm, it is 43 - 69 mm. Naturally, these distances change when the length of the guideway changes. Figures 2b and 2c show the slide 3 as seen from two different directions. The slide is additionally supported to the edges of an opening provided in the guideway preventing thus twisting of the slide. Then the slide and thus the roller at the same time are kept in the desired position irrespective of loading. For the roller, the slide 3 is additionally provided with a conical shoulder 17, the taper bore 18 corresponding to which is in the roller 3 (Figures 3a and 3b). The roller is centered and locked non-rotating by the conical fit. The screw 8 can be replaced by removing the roller 3, or its position can be changed by turning (Figure 1a). Thus a possibly worn or damaged point of toothing can be quickly and easily moved to a different position, and machining can continue.

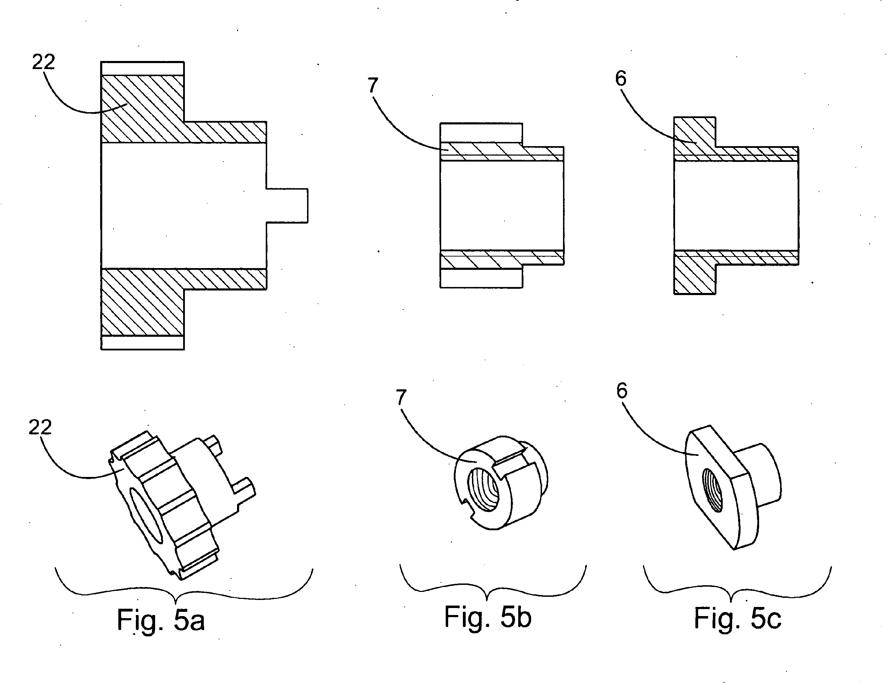

In addition to a novel and surprising way of operation, the puller has versatile adjustment possibilities. Figure 4 shows adjustable loading elements 15 according to the invention. According to the invention, the slides 3 of both rollers are connected to each other with an adjustor screw 4. More precisely, the puller comprises an adjustor screw 4, the ends of which are provided with threads of different handedness, adapted to functionally connect the slides. Thus by turning one adjustor screw, both rollers move equally much, but to different directions. For this end, the adjustor screw has threads with different handedness at the ends. Provided inside the slide there are also two threaded sleeves between which the loading elements have been arranged. More precisely, the slide 3 comprises a clamping sleeve 6 and an adjustor sleeve 7, having internal threads corresponding to the thread of the adjustor screw 4. In other words, the sleeves move by rotating the adjustor screw moving the slide at the same time. The clamping sleeve 6 is shown in Figure 5a and the adjustor sleeve 7 is shown in Figure 5b. Furthermore, the loading elements 15 consist of two loading springs 9, each of which is arranged between the clamping sleeve 6 and the adjustor sleeve 7 adapted within the slide 3 concerned, around the adjustor screw 4. Thus both rollers are loaded independently of each other, which ensures a firm billet locking. A thin protective plate, which prevents loose material from penetrating to within the guideway, can be set under the rollers. The protective plate is advantageously made of a material which is resistant to heat and machining obstacles, but slides easily along the guideway. A principle of one protective plate is shown in Figure 1a with broken lines.

In Figure 4, as the slide 3 moves toward the end piece 5, the loading spring 9 compresses between the adjustor sleeve 7 and the shoulder 19 provided in the slide 3. Correspondingly, by rotating the adjustor sleeve 7, the pretension of the loading spring 9 can be adjusted as desired. Figure 5a shows an adjustor tool 22 for rotating the adjustor sleeve 7. Preloading is usually carried out when the slides are out of the guideway. In contrast, the distance of the rollers can be adjusted at any time, as a wrench hole 10 is provided at the end of the adjustor screw 4, and the end piece 5 has correspondingly a slightly larger hole 32 than the wrench. All components are made of tool steel and additionally nitrated excluding the springs inside the guideway. The tool steel has good machineability and hardness. Nitration also provides a hard and wear-resistant surface layer with simultaneously a good corrosion resistance. Nitration is also called nitriding.

Based on the above, the puller according to the invention is suitable for moving different billets. It is suitable also for other billets than those having a round cross section with the dimensions being additionally variable. Advantageously the puller comprises a second and a third roller pair with loading springs and an adjustor tool 22 for the loading elements 15. Thus, by changing the rollers, a single puller can be used with all billets that fit in the chuck. A guideway longer than before can be manufactured for larger billets; that is, for larger machine tools. In addition, the puller is reliable in operation and its rollers are wear-resistant. Due to the new and surprising operation, toothings of the rollers wear really slowly, if at all. Toothings may, however, damage due to a misuse, for example, in which case the puller can be quickly returned to the operating condition by rotating the roller.

Due to the above mentioned misuses, according to the invention, a connection 21 equipped with safety locking 20 is provided between the counter lug 12 and the guideway 2. The connection 21 shown in Figure 1a is a dovetail joint, which is strong and clearance-free. The free direction of the connection is substantially the gripping direction of the puller, which in the embodiment of Figure 1a is the direction X. During the cross directional movement of the billet when the puller possibly hits the billet, the safety locking releases and the guideway 2 detaches from the counter lug 12. Thus damage can be avoided. In addition, the counter lug and the guideway can be manufactured as different components, which simplifies the manufacture. On the other hand, thanks to the connection, different counter lugs can be attached to a guideway of one type. Here the safety locking is based on a ball 24, loaded by a spring 23 adapted within the counter lug, which confronts a hole 25 provided in the guideway 2. A spacer plate 26 is also provided between the spring 23 and the ball 24, and dropping of the ball from inside the counter lug is prevented with a suitable shoulder. The compression force of the spring and thus the firmness of the safety locking is adjusted with an adjustor plug 27, which is adapted with a thread to a tapped hole machined inside the counter lug. The safety locking endures normal use, but in overloading cases the guideway detaches form the counter lug. Moreover, the release sensitivity of the safety locking can be adjusted.

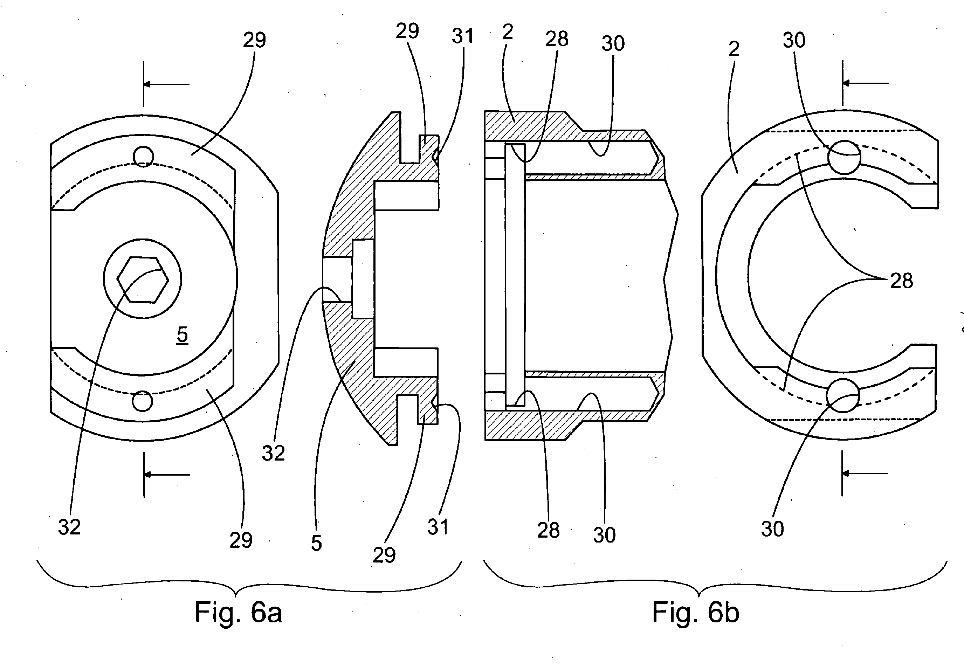

Figure 6b shows a second embodiment of the guideway according to the invention. Here grooves 28 have been machined in the guideway 2 to which the concave end piece 5 locks up. The grooves 28 and the shoulders 29 machined in the end piece 5 are so dimensioned that the end piece 5 pushed into the guideway 2 can be locked in the grooves 28 by turning it 90°. A type of sector locking is concerned, in which case separate fastening screws are unnecessary. The end piece 5 is shown in Figure 6a. In Figures 6a and 6b the end piece 5 and the guideway 2 are shown in the locking position relative to each other, however, separated from each other. For avoiding unintentional rotation, the guideway 2 is provided with spring-loaded locking balls, for which the guideway 2 has bores 30. The locking balls lock up to the openings 31 arranged in the end piece 5. Thus the end piece can be detached and attached even without tools. However, according to the invention, the opening 32 in the end piece 5 required for rotating the adjustor screw is shaped as hex socket, which is at least a wrench size larger than the wrench hole of the adjustor screw (Figure 4). Thus the end piece can be rotated when necessary using an Allen wrench and the adjustor screw can be turned with an Allen wrench one wrench size smaller. The novel locking method and design enable utilizing the guideway over a longer distance than before. On the other hand, the length of the guideway can be even shortened at the same time and the puller becomes round-lined. Advantageously, both ends of the guideway are provided with similar end pieces.

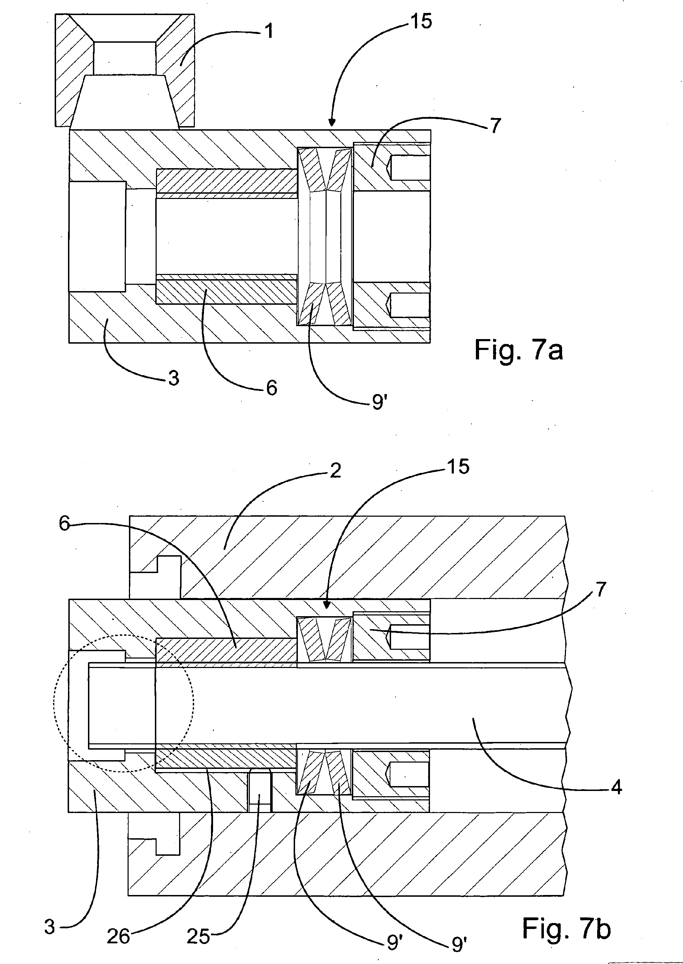

Figure 7a shows the slide 3 of a second embodiment of the puller according to the invention having one roller 1 attached thereto. Correspondingly, Figure 7b shows the same slide 3 turned by 90° and adapted within the guideway 2. In this embodiment, only the clamping sleeve 6 is provided with an internal thread corresponding to the thread of the adjustor screw 4. Thus the force is conveyed from the slide 3 to the adjustor screw 4 through the clamping sleeve 6. In addition, according to the invention, the loading elements 15 are composed of two or more cup springs 9', of which at least one is arranged between the clamping sleeve 6 and the adjustor sleeve 7 adapted within the slide 3 concerned, around the adjustor screw 4. Then, as the distance between the slides increases, the distance between the adjustor sleeve and the clamping sleeve decreases, whereupon the cup springs compress producing a loading effect. The clamping sleeve is allowed to move relative to the slide, but the adjustor sleeve is fastened to the slide with threads. In this embodiment the adjustor sleeve is immobile relative to the slide and in the same position. The cup springs can be replaced with new ones, if necessary, by removing the adjustor sleeve.

Figure 7b also shows a locking pin 25, which is used to prevent the rotation of the clamping sleeve 6 relative to the slide 3. The clamping sleeve 6, however, has a groove 26 corresponding to the locking pin 25 permitting the mutual axial movement of the clamping sleeve 6 and the slide 3. The guideway 2 is finally closed with an end piece (not shown). In Figures 7a and 7b the clamping sleeve 6 is cylindrical, in which case the locking pin 25 is necessary. On the other hand, the clamping sleeve can be made of a hexagonal bar, in which case the locking pin is not needed. When using a bar, a corresponding modification must be made in the slide.

In the second embodiment proposed, the distance between the rollers is adjusted by simply rotating the adjustor screw at one end. Loading, in contrast, is selected in two stages. Firstly, a sufficient amount of cup springs is selected and these are set in a desired manner. Even different cup springs can be used simultaneously. Secondly, roller loading is adjusted as desired by adjusting the mutual position of the rollers smaller than the nominal diameter of the billet D. Thus adjusting the load is fast, precise and extensive. Figure 8a illustrates forces achievable with two exemplifying cup springs. The upper graph has been created by using a cup spring according to the standard DIN 2093, the material thickness of which is 1.25 mm. Correspondingly, the outer diameter of the cup spring is 23 mm and the inner hole diameter is 12.2 mm. Then, for example, a force of about 2500 N is generated with a roller distance one millimeter smaller than the nominal dimension of the billet. The lower graph has been created using cup springs that are similar in other respects except for the material thickness, which is 1.0 mm. Force graphs of several kinds can be provided by changing the characteristics, quantity, and settings of the cup springs. Great forces are required for moving large-diameter and heavy billets. On the other hand, if moving material pipes of a corresponding size, loading can be easily adjusted lower without changing the cup springs. In other words, it is adequate just to increase the distance of the rollers.

The puller according to the invention is extremely versatile and it suits to different machine tools for use with different billets. The puller endures continuous use and it is easy and fast to clean, when required. The puller can be adjusted and its characteristics can be quickly changed using simple tools. Essential is the cross directional movement of the puller relative to the billet, which saves, besides the rollers, the billet itself. It has been found out in practice that using the puller in serial production provides nearly a ten percent saving in time when moving a billet.

## Claims

1. Puller which is intended for moving a billet in a machine tool, and which puller comprises a counter lug (12) and two grappling devices (13) equipped with loading elements (15) for gripping a billet (14), and the grappling devices (13) are arranged in the same line with the midpoint (24) of the billet (14) while the grappling devices (13) form two contact points (23) with the billet (14), **characterized in that** the grappling devices (13) consist of two rollers (1) set non-rotatably to the puller, and the axes of the rollers (1) extend in the direction of the longitudinal axis of the billet (14) such that the rollers (1) are adapted to be set in contact with the billet (14) with a puller movement substantially cross directional to the longitudinal axis of the billet (14), and each roller (1) is equipped with toothing (16) with teeth direction equal to the puller movement.

2. Puller according to claim 1, **characterized in that** each toothing (16) covers the entire circumference of the roller (1).

3. Puller according to claim 1 or 2, **characterized in that** the counter lug (12) includes a guideway (2), to which a slide (3) is arranged for both rollers (1).

4. Puller according to any of claims 1 - 3, **characterized in that** the puller comprises an adjustor screw (4) with threads of different handedness at the ends, adapted to functionally connect the slides (3).

5. Puller according to claim 3 or 4, **characterized in that** the slide (3) comprises a clamping sleeve (6) and an adjustor sleeve (7), which both have internal threads corresponding to the thread of the adjustor screw (4).

6. Puller according to claim 5, **characterized in that** the loading elements (15) consist of two loading springs (9), each of which is arranged between the clamping sleeve (6) and the adjustor sleeve (7) adapted within the slide (3) concerned, around the adjustor screw (4).

7. Puller according to claim 3 or 4, **characterized in that** the slide (3) includes a clamping sleeve (6) and an adjustor sleeve (7), of which only the clamping sleeve (6) has an internal thread corresponding to the thread of the adjustor screw (4) .

8. Puller according to claim 7, **characterized in that** loading elements (15) consist of two or more cup springs (9'), of which at least one is arranged between the clamping sleeve (6) and the adjustor sleeve (7) adapted within the slide (3) concerned, around the adjustor screw (4).

9. Puller according to any of claims 1 - 8, **characterized in that** the puller comprises a second and a third roller pair with loading elements (15) and an adjustor tool (22) for the loading elements (15).

10. Puller according to claim 3, **characterized in that** a connection (21) equipped with safety locking (20) is provided between the counter lug (12) and the guideway (2).

11. Method for moving a billet in a machine tool, which method uses a puller to be attached to the machine tool, and two grappling devices (13) comprised therein are driven in contact with the billet (14) such that the grappling devices (13) form two contact points (23) with the billet (14), and the contact points (23) are set to be in the same line with the midpoint (24) of the billet (14), after which the billet (14) is moved by moving the puller with the machine tool in longitudinal direction of the billet (14), **characterized in that** as the grappling devices (13) two rollers (1) are used, which rollers (1) are set non-rotatably to the puller and wherein the axes of the rollers (1) extend in the direction of the longitudinal axis of the billet (14) such that they are driven in contact with the billet (14) with a puller movement substantially cross directional to the longitudinal axis of the billet (14), and each roller (1) is equipped with toothing (16) with teeth direction equal to the puller movement.

12. Method according to claim 11, **characterized in that** both loading and the mutual position of the rollers (1) are adjusted independently of each other.

13. Method according to claim 11, **characterized in that** both loading and the mutual position of the rollers (1) are adjusted dependently of each other.

14. Method according to claim 11, **characterized in that** loading of the rollers (1) is adjusted as desired by adjusting the mutual position of the rollers (1) smaller than the nominal diameter (D) of the billet (14) .

## Patentansprüche

1. Zum Bewegen eines Rohlings (Billets) in einer Werkzeugmaschine bestimmtes Zugwerkzeug (Puller), das ein Befestigungsteil (12) und zwei mit Belastungselementen (15) versehene Greiforgane(13) zum Erfassen des Rohlings (14) hat, wobei diese Greiforgane (13) auf gleicher Geraden mit dem Mittelpunkt (24) des Rohlings (14) angeordnet sind und die Greiforgane (13) zwei Berührungspunkte (23) mit dem Rohling (14) haben, **dadurch gekennzeichnet, dass** die Greiforgane (13) aus zwei an dem Zugwerkzeug nicht rotierbar angeordneten Rollen (1) bestehen und die Achsen der Rollen (1) sich so parallel zu der Längsachse des Rohlings (14) erstrecken, dass die Rollen (1) durch eine zur Längsachse des Rohlings (14) im Wesentlichen quergerichtete Bewegung des Zugwerkzeugs in Kontakt zu dem Rohling (14) gebracht werden können, und jede Rolle (1) eine Zahnung (16) aufweist, deren Zähne in Bewegungsrichtung des Zugwerkzeugs verlaufen.

2. Zugwerkzeug nach Anspruch 1, **dadurch gekennzeichnet, dass** jede der Zahnungen (16) über den gesamten Umfang der Rolle (1) reicht.

3. Zugwerkzeug nach Anspruch 1 oder 2, **dadurch gekennzeichnet, dass** das Befestigungsteil (12) eine Führung (2) mit einem Gleitstück (3) für jede Rolle (1) hat.

4. Zugwerkzeug nach irgendeinem der Ansprüche 1 bis 3, **dadurch gekennzeichnet, dass** das Zugwerkzeug eine die Gleitstücke (3) funktionell miteinander koppelnde Stellschraube (4) mit zueinander gegenläufigen Gewinden an ihren Enden hat.

5. Zugwerkzeug nach Anspruch 3 oder 4, **dadurch gekennzeichnet, dass** zu dem Gleitstück (3) eine Spannbuchse (6) und eine Einstellbuchse (7) gehören, die beide ein dem Gewinde der Stellschraube (4) entsprechendes Innengewinde haben.

6. Zugwerkzeug nach Anspruch 5, **dadurch gekennzeichnet, dass** die Belastungselemente (15) aus zwei Belastungsfedern (9) bestehen und jede dieser Belastungsfedern zwischen der im Inneren des Gleitstücks (3) angeordneten Spannbuchse (6) und Einstellbuchse (7) um die Einstellschraube (4) herum angeordnet ist.

7. Zugwerkzeug nach Anspruch 3 oder 4, **dadurch gekennzeichnet, dass** das Gleitstück (3) eine Spannbuchse (6) und eine Einstellbuchse (7) umfasst, und von diesen lediglich die Spannbuchse (6) ein dem Gewinde der Stellschraube (4) entsprechendes Innengewinde hat.

8. Zugwerkzeug nach Anspruch 7, **dadurch gekennzeichnet, dass** die Belastungselemente (15) aus zwei oder mehr Tellerfedern (9') bestehen, von denen wenigstens eine zwischen der im Inneren des Gleitstücks (3) angeordneten Spannbuchse (6) und Einstellbuchse (7) um die Einstellschraube (4) herum angeordnet ist.

9. Zugwerkzeug nach irgendeinem der Ansprüche 1 bis 8, **dadurch gekennzeichnet, dass** das Zugwerkzeug ein zweites und drittes Rollenpaar einschließlich Belastungselementen (15) und ein Stellwerkzeug (22) für die Belastungselemente (15) umfasst.

10. Zugwerkzeug nach Anspruch 3, **dadurch gekennzeichnet, dass** zwischen dem Befestigungsteil (12) und der Führung (2) eine mit Sicherheitsverriegelung (20) versehene Verbindung (21) vorhanden ist.

11. Zum Bewegen eines Rohlings (Billets) in einer Werkzeugmaschine dienendes Verfahren, bei dem ein an der Werkzeugmaschine zu befestigendes Zugwerkzeug (Puller) eingesetzt wird, dessen zwei Greiforgane (13) so in Kontakt zu dem Rohling (14) gebracht werden, dass sie zwei Berührungspunkte (23) mit dem Rohling (14) haben, und die Berührungspunkte (23) so eingerichtet sind, dass sie auf gleicher Geraden mit dem Mittelpunkt (24) des Rohlings (14) liegen, wonach der Rohling (14) durch Bewegen des Zugwerkzeugs durch Bewegen der Werkzeugmaschine in Richtung der Längsachse des Rohlings bewegt wird, **dadurch gekennzeichnet, dass** als Greiforgane (13) zwei Rollen (1) benutzt werden, die an dem Zugwerkzeug nicht rotierbar angeordnet werden, wobei die Achsen der Rollen (1) sich so parallel zu der Längsachse des Rohlings (14) erstrecken, dass diese durch eine zur Längsachse des Rohlings (14) im Wesentlichen quergerichtete Bewegung des Zugwerkzeugs in Kontakt zu dem Rohling (14) gebracht werden, und jede Rolle (1) eine Zahnung (16) aufweist, deren Zähne in Bewegungsrichtung des Zugwerkzeugs verlaufen.

12. Verfahren nach Anspruch 11, **dadurch gekennzeichnet, dass** sowohl die Belastung der Rollen (1) als auch deren gegenseitige Position unabhängig voneinander eingestellt werden.

13. Verfahren nach Anspruch 11, **dadurch gekennzeichnet, dass** sowohl die Belastung der Rollen (1) als auch deren gegenseitige Position in Abhängigkeit voneinander eingestellt werden.

14. Verfahren nach Anspruch 11, **dadurch gekennzeichnet, dass** das Einstellen der Belastung der Rollen (1) auf den gewünschten Wert durch Einstellen der gegenseitigen Position der Rollen (1) auf einen Wert kleiner als der Nenndurchmesser (D) des Rohlings (14) erfolgt.

## Revendications

1. Extracteur destiné à déplacer une billette dans une machine-outil, et lequel extracteur comprend une oreille de fixation (12) et deux appareils préhenseurs (13) équipés d'éléments de charge (15) pour saisir la billette (14), et lesquels appareils préhenseurs (13) sont disposés sur la même ligne que le point central (24) de la billette (14) tandis que les appareils préhenseurs (13) forment deux points de contact (23) avec la billette (14), **caractérisé en ce que** les appareils préhenseurs (13) se composent de deux roulettes (1) installées de manière non-rotative dans l'extracteur, et les axes des roulettes (1) s'étendent dans le sens de l'axe longitudinal de la billette (14) de sorte que les roulettes (1) sont adaptées à être posées au contact de la billette (14) par un mouvement de l'extracteur essentiellement transversal par rapport à l'axe longitudinal de la billette (14), et chaque roulette (1) est équipée d'une dentelure (16) avec des dents dans le sens du mouvement de l'extracteur.

2. Extracteur selon la revendication 1, **caractérisé en ce que** chaque dentelure (16) couvre toute la circonférence de la roulette (1).

3. Extracteur selon la revendication 1 ou 2, **caractérisé en ce que** l'oreille de fixation (12) comprend une glissière (2) où est disposé un coulisseau (3) pour chaque roulette (1).

4. Extracteur selon l'une quelconque des revendications 1 - 3, **caractérisé en ce que** l'extracteur comprend une vis de réglage (4) filetée à droite à une extrémité et à gauche à l'autre extrémité, adaptée à combiner les coulisseaux (3) du point de vue fonctionnel.

5. Extracteur selon la revendication 3 ou 4, **caractérisé en ce que** le coulisseau (3) comprend un manchon de serrage (6) et un manchon de réglage (7), qui ont tous les deux un filetage intérieur correspondant au filetage de la vis de réglage (4).

6. Extracteur selon la revendication 5, **caractérisé en ce que** les éléments de charge (15) se composent de deux ressorts de charge (9), dont chacun est disposé autour de la vis de réglage (4) installée entre le manchon de serrage (6) et le manchon de réglage (7) à l'intérieur du coulisseau (3) en question.

7. Extracteur selon la revendication 3 ou 4, **caractérisé en ce que** le coulisseau (3) comprend un manchon de serrage (6) et un manchon de réglage (7), dont seulement le manchon de serrage (6) a un filetage intérieur correspondant au filetage de la vis de réglage (4).

8. Extracteur selon la revendication 7, **caractérisé en ce que** les éléments de charge (15) se composent de deux ou plusieurs rondelles de belleville (9), dont au moins une est disposée autour de la vis de réglage (4) installée entre le manchon de serrage (6) et le manchon de réglage (7) à l'intérieur du coulisseau (3) en question.

9. Extracteur selon l'une quelconque des revendications 1 - 8, **caractérisé en ce que** l'extracteur comprend une deuxième et une troisième paire de roulettes avec leurs éléments de charge (15) et un outil de réglage (22) pour les éléments de charge (15).

10. Extracteur selon la revendication 3, **caractérisé en ce qu'**il y a un raccord (21) équipé d'un verrouillage de sécurité (20) entre l'oreille de fixation (12) et la glissière (2).

11. Méthode pour déplacer la billette dans la machine-outil, laquelle méthode utilise un extracteur attaché à la machine-outil, et les deux appareils préhenseurs (13) qui y appartiennent sont menés au contact de la billette (14) de sorte que les appareils préhenseurs (13) forment deux points de contact (23) avec la billette (14), et les points de contact (23) sont disposés de sorte qu'ils sont sur la même ligne que le point central (24) de la billette (14), après quoi la billette (14) est déplacée en déplaçant l'extracteur grâce à la machine-outil dans le sens longitudinal de la billette (14), **caractérisé en ce que** l'on utilise deux roulettes (1) comme appareils préhenseurs (13), lesquelles roulettes (1) sont posées de manière non-rotative dans l'extracteur et où les axes des roulettes (1) s'étendent dans le sens de l'axe longitudinal de la billette (14) de sorte qu'ils sont amenés au contact de la billette (14) par un mouvement de l'extracteur essentiellement dans le sens transversal de l'axe longitudinal de la billette (14), et chaque roulette (1) est équipée d'une dentelure (16) dont les dents sont dans la direction du mouvement de l'extracteur.

12. Méthode selon la revendication 11, **caractérisée en ce que** et la charge et les positions mutuelles des roulettes (1) sont réglées indépendamment l'une de l'autre.

13. Méthode selon la revendication 11, **caractérisée en ce que** et la charge et les positions mutuelles des roulettes (1) sont réglées d'une manière dépendante l'une de l'autre.

14. Méthode selon la revendication 11, **caractérisée en ce que** la charge des roulettes (1) est ajustée comme désirée en ajustant la position mutuelle des roulettes (1) de sorte que leur écartement soit inférieur au diamètre nominal (D) de la billette (14).
